# DEMANDE DE BREVET EUROPEEN

(11) **EP 4 124 468 A1**
(43) Date de publication de la demande: **01.02.2023**
(21) Numéro de dépôt: 22183185.2
(22) Date de dépôt: 05.07.2022
(51) Int. Cl.: B60B 7/02, B60B 7/08, B60B 7/18

(54) **ACCESSOIRE POUR UNE ROUE D'UN VÉHICULE**

(30) Priorité: 26.07.2021 FR 2108079
(71) Demandeur: Renault s.a.s, 92100 Boulogne Billancourt (FR)
(72) Inventeur: BOLIS, Stefano, 78280 GUYANCOURT (FR); CHATELAIN, Pascal, 78280 GUYANCOURT (FR); FREZZA, Olivier, 78280 GUYANCOURT (FR); LAFORGE, Stephane, 72000 LE MANS (FR); LECLER, David, 78280 GUYANCOURT (FR)

(57) **Abrégé**

Accessoire (1) pour une roue d'un véhicule, notamment destiné à être fixé de façon amovible à une roue, par exemple par clippage, l'accessoire (1) comprenant, sous la forme d'une seule pièce, une partie centrale (3) destinée à recouvrir au moins partiellement un moyeu d'une roue, et une partie périphérique (5) comprenant au moins une branche (7), l'au moins une branche (7) étant destinée à s'insérer au moins partiellement dans une ouverture délimitée par deux bras reliant un moyeu à une jante d'une roue.

## Description

L'invention concerne un accessoire pour une roue d'un véhicule. L'invention porte aussi sur un ensemble comprenant une roue et un tel accessoire. L'invention porte encore sur un véhicule comprenant un tel accessoire ou un tel ensemble. L'invention porte également sur un procédé de montage d'un tel accessoire sur une roue. L'invention porte aussi sur un procédé de démontage d'un tel accessoire par rapport à une roue. L'invention porte enfin sur un procédé de fabrication d'un tel accessoire.

Dans un véhicule automobile, il apparaît important de minimiser la masse des roues tout en respectant des contraintes de tenue à la fatigue des roues et de résistance aux chocs éventuels sur une roue. En outre, l'aspect esthétique des roues est important.

On connaît des roues équipées d'un enjoliveur.

Toutefois, les solutions existantes présentent des inconvénients. En particulier, un enjoliveur est habituellement fixé sur une roue d'un véhicule au moyen de vis ou par collage. Il en résulte un procédé de montage complexe, long et onéreux d'un tel enjoliveur sur une roue. En outre, le démontage d'un tel enjoliveur par rapport à une roue s'avère complexe voire difficilement réalisable. Le démontage d'un tel enjoliveur par rapport à une roue rend visible les trous ménagés dans la roue pour recevoir les vis, ce qui s'avère peu esthétique. En outre, les enjoliveurs des solutions existantes présentent des formes simples.

Le but de l'invention est de fournir un accessoire pour une roue d'un véhicule et un procédé de montage et de démontage d'un tel accessoire par rapport à une roue remédiant aux inconvénients ci-dessus et améliorant les dispositifs et procédés connus de l'art antérieur. En particulier, l'invention permet de réaliser un accessoire personnalisable destiné à être fixé de façon amovible à une roue et un procédé de montage et de démontage d'un tel accessoire qui soient simples et rapides et qui permettent de changer facilement d'accessoire.

L'invention concerne un accessoire pour une roue d'un véhicule, notamment destiné à être fixé de façon amovible à une roue, par exemple par clippage, l'accessoire comprenant, sous la forme d'une seule pièce, une partie centrale destinée à recouvrir au moins partiellement un moyeu d'une roue, et une partie périphérique comprenant au moins une branche, l'au moins une branche étant destinée à s'insérer au moins partiellement dans une ouverture délimitée par deux bras reliant un moyeu à une jante d'une roue.

La partie centrale peut avoir la forme d'un disque.

L'accessoire peut être configuré pour laisser apparentes au moins certaines portions d'une roue.

L'accessoire peut être de forme non plane, l'au moins une branche de la partie périphérique étant notamment apte à s'étendre dans une ouverture d'une roue, d'une surface avant d'une roue vers une surface arrière d'une roue.

L'accessoire peut être en au moins un matériau plastique, notamment choisi dans le groupe comprenant le polypropylène expansé et les polyamides, et/ou peut être formé par moulage par injection, notamment d'au moins un matériau plastique, sous la forme d'une seule pièce.

L'accessoire peut comprendre au moins un moyen de fixation destiné à fixer de façon amovible l'accessoire à une roue, l'au moins un moyen de fixation comprenant au moins un clip, notamment bi-matière, par exemple au moins en partie formé par moulage par injection en même temps que la partie centrale et la partie périphérique de l'accessoire sous la forme d'une seule pièce.

L'accessoire peut comprendre :
- un moyen de fixation central, comprenant au moins un clip et éventuellement un anneau, l'au moins un clip comprenant notamment une patte de clippage, destiné à la fixation amovible de l'accessoire, notamment de sa partie centrale, sur une roue, notamment sur un moyeu ; et/ou
- un moyen de fixation périphérique, comprenant au moins un clip, comprenant notamment une patte de clippage et éventuellement un moyen de rappel élastique, destiné à la fixation amovible de l'accessoire, notamment de sa partie périphérique, sur une roue, notamment sur un bras.

L'au moins une patte de clippage du moyen de fixation périphérique peut être destinée à être positionnée derrière un bras d'une roue.

L'invention concerne également un ensemble comprenant une roue pour un véhicule, notamment en aluminium, et un accessoire défini précédemment, configuré pour être fixé de façon amovible à la roue, la roue comprenant au moins deux bras reliant un moyeu à une jante, la partie périphérique de l'accessoire comprenant par exemple cinq branches, chaque branche étant destinée à s'insérer au moins partiellement dans une ouverture de la roue délimitée par deux bras.

L'invention concerne également un véhicule, notamment automobile, comprenant un accessoire défini précédemment ou un ensemble défini précédemment.

L'invention concerne également un procédé de montage d'un accessoire défini précédemment sur une roue, comprenant les étapes suivantes :
- fixation amovible de la partie périphérique sur une roue, notamment sur au moins un bras ;
- fixation amovible de la partie centrale sur le moyeu de la roue.

L'invention concerne également un procédé de fabrication d'un accessoire défini précédemment, comprenant une étape de moulage par injection, notamment d'au moins un matériau plastique, par exemple choisi dans le groupe comprenant le polypropylène expansé et les polyamides, en utilisant un seul moule, notamment pour former une partie centrale, une partie périphérique et au moins une partie d'un moyen de fixation central et/ou d'un moyen de fixation périphérique de l'accessoire.

Les dessins annexés représentent, à titre d'exemple, un mode de réalisation d'un accessoire pour une roue selon l'invention et un mode d'exécution d'un procédé selon l'invention de montage et de démontage d'un tel accessoire par rapport à une roue.
[Fig. 1] La figure 1 est une vue en perspective éclatée avant représentant de façon schématique un mode de réalisation d'un ensemble comprenant une roue et un accessoire pour une roue.
[Fig. 2] La figure 2 est une vue en perspective arrière représentant un mode de réalisation d'un accessoire pour une roue.
[Fig. 3] La figure 3 est une vue en perspective avant représentant un mode de réalisation d'un ensemble comprenant une roue et un accessoire du type de celui de la figure 2.
[Fig. 4] La figure 4 est une vue en perspective arrière représentant un mode de réalisation d'un moyen de fixation central d'un accessoire pour une roue.
[Fig. 5] La figure 5 est une vue en perspective arrière et partielle représentant un mode de réalisation d'un ensemble comprenant une roue et un accessoire.
[Fig. 6] La figure 6 est une vue en perspective arrière représentant un mode de réalisation d'un moyen de fixation périphérique d'un accessoire pour une roue.
[Fig. 7] La figure 7 est une vue en coupe selon un plan A-A' représentant un mode de réalisation d'un moyen de fixation périphérique d'un accessoire pour une roue.
[Fig. 8] La figure 8 est une vue en perspective arrière partielle représentant un mode de réalisation d'un accessoire pour une roue.
[Fig. 9] La figure 9 est un résultat d'une simulation mécanique concernant un dispositif de fixation destiné à fixer de façon amovible un accessoire sur une roue.
[Fig. 10] La figure 10 est une vue avant représentant un mode de réalisation d'un ensemble comprenant une roue et un accessoire pour une roue.

L'invention propose de réaliser une roue technique allégée ou de masse réduite, notamment en aluminium, et d'associer de façon amovible à une telle roue un accessoire, notamment en plastique.

Par roue, ou roue technique, on entend la partie structurelle d'un ensemble comprenant une roue, par exemple métallique, notamment en aluminium, et un accessoire, notamment en plastique, qui permet seule, sans l'accessoire, de résister à la fatigue et/ou aux chocs et/ou de supporter la charge d'un véhicule, et qui permet seule, sans l'accessoire, à un véhicule de se déplacer.

Par roue technique allégée, on entend notamment une roue dont la masse est optimisée, notamment minimisée. Il en résulte notamment une optimisation du coût en matériaux.

Un ensemble comprenant une roue, notamment en aluminium, et un accessoire, notamment en plastique, peut être conçu en déterminant ou en analysant quelle partie d'une roue correspond à la partie technique de la roue, c'est-à-dire à la roue technique, et quelle partie d'une roue correspond à la partie non essentielle ou complémentaire de la roue, c'est-à-dire à l'accessoire, et peut être réalisée en plastique. L'invention propose de concevoir un tel ensemble comprenant une roue et un accessoire de sorte à conserver la qualité perçue de l'ensemble voire à l'améliorer par rapport à une roue en une seule pièce, notamment métallique, et de sorte à répondre aux contraintes de tenue mécanique et thermiques inhérentes à l'ensemble, et en s'assurant que la roue technique puisse également être proposée ou assurer sa fonction de roulage seule, sans accessoire.

Dans la description qui suit, le terme roue correspond notamment à une roue technique telle que définie ci-dessus.

L'invention permet d'offrir à un utilisateur d'un ensemble comprenant une roue métallique, notamment en aluminium, et un accessoire, notamment en plastique, un rendu visuel ou une qualité perçue identique ou sensiblement identique, voire améliorée, par rapport à une roue entièrement métallique.

Avantageusement, l'accessoire est destiné à être clipsé ou clippé ou encliqueté sur une roue, notamment derrière au moins un bras d'une roue.

L'invention propose un accessoire comprenant au moins un moyen de fixation destiné à fixer ou assembler de façon amovible l'accessoire, notamment en plastique, avec une roue, notamment en aluminium, notamment en tenant compte de contraintes thermiques, notamment des phénomènes de convection et/ou de rayonnement thermiques liés aux freins d'un véhicule positionnés derrière la roue. De tels phénomènes, dans des cas extrêmes de tests ou essais, peuvent entraîner des valeurs de température supérieures à 700°C.

Un tel moyen de fixation permet le montage et/ou le démontage de l'accessoire, notamment en plastique, par rapport à une roue dans un temps de cycle ou une durée raisonnable de montage ou démontage, et sans avoir d'impact la roue qui pourrait également être utilisée seule, sans accessoire.

Le choix technique de positionnement d'au moins un moyen de fixation de l'accessoire derrière le ou les bras d'une roue a requis de la part de la Demanderesse des études ou évolutions en termes de plans d'encombrement et de considérations thermiques, notamment du fait de la proximité des freins et/ou du calibre pour le montage d'une roue.

La Demanderesse a notamment pris en compte des jeux possibles d'assemblage entre un accessoire et une roue lors de la conception (« design » en anglais) d'un ensemble comprenant un accessoire et une roue, en tenant compte notamment de tolérances de fabrication de l'accessoire et/ou de la roue et de leurs formes spécifiques. En effet, les tolérances de pièces en plastique obtenues par moulage par injection sont différentes des tolérances de pièces en aluminium obtenues par moulage.

La Demanderesse s'est notamment assurée que l'ensemble comprenant un accessoire et une roue répondait aux exigences des cahiers des charges, notamment au moyen de calculs concernant l'accessoire et/ou la roue seules et concernant l'accessoire et la roue assemblés ainsi qu'au moyen d'essais sur véhicules.

Lors de la conception d'un ensemble comprenant un accessoire et une roue, une étude des possibilités d'évidement-remplacement a permis de définir deux pièces numériques distinctes correspondant à l'accessoire et à la roue. Une difficulté était d'identifier la zone de liaison entre les deux pièces, l'accessoire et la roue, qui permettrait de conserver l'effet esthétique ou de qualité perçue désiré en tenant compte de contraintes techniques telles que des contraintes de fabrications de l'accessoire et/ou de la roue (démoulage, etc....), des effets de matières, des caractéristiques de chaque matériau et leurs ajustements.

Avantageusement, l'invention propose un accessoire pour une roue comprenant au moins un moyen de fixation destiné à fixer de façon amovible l'accessoire à une roue, le moyen de fixation étant co-intégré au moins en partie avec l'accessoire et comprenant notamment au moins un clip, par exemple bi-matière. Un tel moyen de fixation est destiné à assurer l'assemblage ou le montage de l'accessoire sur une roue, l'accessoire étant notamment en prise derrière au moins un bras d'une roue. Un tel moyen de fixation est en outre destiné à permettre un désassemblage ou démontage de l'accessoire par rapport à une roue, notamment pour une éventuelle utilisation seule d'une roue, sans l'accessoire.

Un avantage d'un accessoire selon l'invention est lié au fait qu'il peut être personnalisé, notamment en ce qui concerne sa forme et/ou son style et/ou sa ou ses couleurs. Un tel accessoire peut être utilisé pour des animations après-vente d'un véhicule, en offrant la possibilité de changer d'accessoire. La forme de l'accessoire pourra par exemple être choisie en tenant compte de considérations aérodynamiques, notamment pour optimiser des émissions de dioxyde de carbone (CO₂) d'un véhicule.

L'invention propose un accessoire pour une roue d'un véhicule, notamment destiné à être fixé de façon amovible à une roue, par exemple par clippage ou clipsage ou encliquetage, l'accessoire comprenant, sous la forme d'une seule pièce, une partie centrale, notamment destinée à recouvrir au moins partiellement un moyeu d'une roue, et une partie périphérique comprenant au moins une branche, l'au moins une branche étant destinée à s'insérer au moins partiellement dans une ouverture délimitée par deux bras reliant un moyeu à une jante d'une roue.

Avantageusement, l'accessoire permet de laisser visible pour un utilisateur au moins une partie de la face avant d'une roue lorsque l'accessoire est assemblé avec une roue. Il en résulte une qualité perçue élevée de l'ensemble comprenant une roue métallique, notamment en aluminium, et un accessoire, notamment en au moins un matériau plastique.

Avantageusement, l'accessoire peut présenter une fonction d'enjoliveur pour une roue. L'accessoire est notamment destiné à enjoliver une roue ou à augmenter son aspect esthétique et/ou sa qualité perçue.

L'accessoire, notamment en plastique, peut en outre présenter une fonction d'insert pour une roue.

Avantageusement, l'accessoire peut être amovible ou détachable ou interchangeable. On peut ainsi changer d'accessoire, par exemple pour des raisons aérodynamiques et/ou pour des raisons esthétiques et/ou de qualité perçue, en choisissant un accessoire parmi des accessoires de formes et/ou de styles et/ou de couleurs et/ou de matières et/ou de matériaux et/ou d'états de surface différents. Il en résulte une personnalisation possible d'un tel accessoire, notamment en termes de forme et/ou de style et/ou de couleur et/ou matière et/ou de matériau et/ou d'état de surface, notamment sans impact sur une roue métallique qui est la partie technique forte (tenue ou résistance à la fatigue et/ou chocs ... ) de l'ensemble comprenant une accessoire et une roue.

Avantageusement, l'accessoire comprend au moins un moyen de fixation permettant un bon maintien ou une bonne fixation de l'accessoire sur une roue, notamment pour empêcher l'accessoire de se désolidariser d'une roue de façon non contrôlée, en particulier lorsqu'un véhicule équipé d'une telle roue est en mouvement.

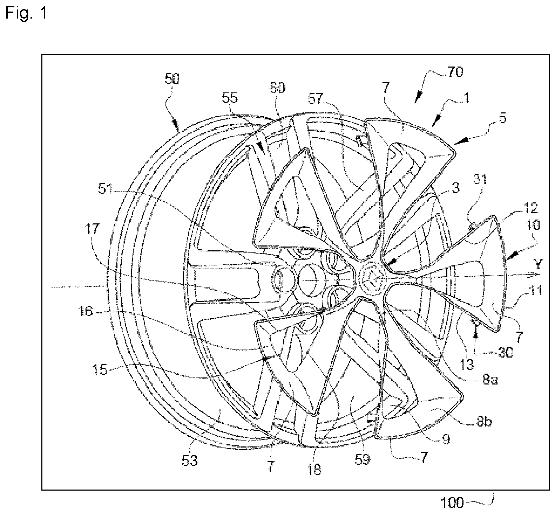

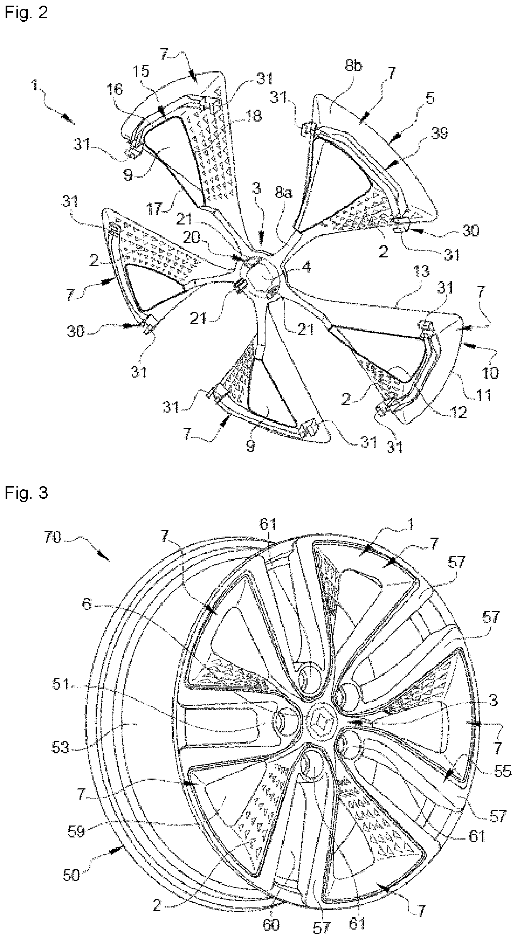

Un accessoire 1 pour une roue 50 d'un véhicule est décrit ci-après en référence à la figure 1 et à la figure 2.

On définit l'axe Y comme étant l'axe passant par le centre de l'accessoire 1, et étant destiné à passer par le centre d'un moyeu 51 d'une roue 50. L'axe Y correspond par exemple à l'axe de rotation d'une roue 50. L'axe Y est dirigé de l'arrière vers l'avant de l'accessoire 1, et de l'arrière vers l'avant d'une roue 50.

Concernant l'accessoire 1 et une roue 50, les termes « arrière » et « avant » sont définis par rapport à l'orientation de l'axe Y de l'arrière vers l'avant.

Lorsqu'une roue 50 est positionnée sur un véhicule 100, la «surface arrière de la roue » ou la « face arrière de la roue » est la surface ou la face de la roue perpendiculaire à l'axe Y la plus proche de l'intérieur du véhicule. La « surface avant de la roue » ou « face avant de la roue » est la surface ou la face de la roue perpendiculaire à l'axe Y la plus éloignée de l'intérieur du véhicule. Des définitions similaires s'appliquent également à l'accessoire 1.

L'axe Y est par exemple destiné à être orienté de façon parallèle ou sensiblement parallèle à l'axe transversal d'un véhicule 100, notamment automobile. L'axe transversal d'un véhicule automobile est défini comme étant l'axe perpendiculaire à l'axe longitudinal selon lequel le véhicule se déplace habituellement en ligne droite, et formant, avec un axe Z sensiblement perpendiculaire au sol, un repère orthogonal.

L'accessoire 1 est par exemple destiné à servir d'enjoliveur pour une roue 50.

L'accessoire 1 peut comprendre une partie centrale 3 et une partie périphérique 5.

Avantageusement, la partie centrale 3 et la partie périphérique 5 de l'accessoire 1 forment une seule pièce.

La partie centrale 3 peut avoir la forme d'un disque, servant par exemple de support 6 pour un logo 4 d'une marque d'un véhicule automobile.

La partie centrale 3 peut coïncider avec une ouverture centrale d'un moyeu 51 d'une roue 50.

La partie périphérique 5 peut comprendre au moins une branche, ou pale, 7. L'au moins une branche 7 peut s'étendre à partir de la partie centrale 3 et rayonner radialement à partir de la partie centrale 3.

La partie périphérique 5 peut comprendre plusieurs branches 7, ou pales, s'étendant à partir de la partie centrale 3 et rayonnant radialement à partir de la partie centrale 3.

Les branches 7 peuvent être angulairement équidistantes les unes des autres.

A titre d'exemple, la partie périphérique 5 peut comprendre cinq branches 7, notamment angulairement équidistantes les unes des autres.

L'au moins une branche 7 peut avoir une forme triangulaire ou sensiblement triangulaire. D'autres formes pourront bien entendu être prévues pour l'au moins une branche 7.

L'au moins une branche 7 peut comprendre une première portion 8a et une deuxième portion 8b. La première portion 8a peut s'étendre à partir de la partie centrale 3 et rayonner radialement à partir de la partie centrale 3. La première portion 8a peut présenter une forme allongée. La deuxième portion 8b peut présenter une forme triangulaire ou sensiblement triangulaire et peut s'étendre à partir de la première portion 8a et rayonner radialement à partir de la première portion 8a. Le sommet de la deuxième portion 8b de forme sensiblement triangulaire peut correspondre à l'extrémité distale de la première portion 8a par rapport à la partie centrale 3. La base de la deuxième portion 8b de forme sensiblement triangulaire peut correspondre au bord de la branche 7 le plus éloigné de la partie centrale 3.

Avantageusement, l'au moins une branche 7 peut être évidée ou peut comprendre au moins une ouverture 9, ou ajour, notamment située sensiblement au centre de la branche 7, par exemple dans la deuxième portion 8b. Il en résulte notamment une masse réduite de la branche 7 par rapport à une branche 7 qui ne serait pas ajourée et/ou une augmentation de la qualité perçue d'un ensemble comprenant un accessoire et une roue.

L'ouverture 9 peut être de forme triangulaire ou sensiblement triangulaire. D'autres formes pourront bien entendu être prévues pour l'ouverture 9.

L'au moins une branche 7 peut comprendre un contour externe 10, comprenant une portion périphérique 11 et une première et une deuxième portions radiales 12 et 13. La première portion radiale 12 et la deuxième portion radiale 13 s'étendent chacune radialement à partir de la partie centrale 3 de l'accessoire 1 jusqu'à une des deux extrémités de la portion périphérique 11. La portion périphérique 11 de la branche 7 correspond à la portion de l'accessoire 1 destinée à être la plus éloignée radialement par rapport au centre d'un moyeu 51 d'une roue 50.

De préférence, le contour externe 10 de l'au moins une branche 7 peut être situé dans un même plan perpendiculaire à l'axe Y que la partie centrale 3.

L'au moins une branche 7 peut comprendre en outre un contour interne 15, comprenant une portion périphérique 16 et une première et une deuxième portions radiales 17, 18. Le contour interne 15 peut délimiter une ouverture 9 de la branche 7.

Avantageusement, l'au moins une branche 7 peut présenter une surface non pale. Avantageusement, l'au moins une branche 7 peut présenter une surface concave vue de la face avant de l'accessoire 1. L'au moins une branche 7 peut présenter une forme évasée du contour externe 10 vers le contour externe 15.

Avantageusement, le contour externe 10 et le contour interne 15 de l'au moins une branche 7 peuvent se situer à des niveaux différents selon la direction Y.

Avantageusement, le contour externe 10 et le contour interne 15 de l'au moins une branche 7 peuvent être situés dans des plans perpendiculaires à l'axe Y différents. Le contour externe 10 de la branche 7 peut être situé plus en avant que le contour interne 15. Lorsque l'accessoire 1 est assemblé de façon amovible avec une roue 50, l'au moins une branche 7 peut s'étendre de la surface avant vers la surface arrière de la roue 50.

L'au moins une branche 7 peut s'étendre à partir du contour externe 10, notamment dans le plan de la partie centrale 3, jusqu'au contour interne 15 délimitant l'ouverture 9. Lorsque l'accessoire 1 est assemblé de façon amovible avec une roue 50, l'au moins une branche 7 peut s'étendre en profondeur ou de façon plongeante de la surface avant vers la surface arrière d'une roue 50.

Dans le cas où l'accessoire 1 comprend plusieurs branches 7, les branches 7 peuvent être de forme identiques ou sensiblement identiques et/ou de dimensions identiques ou sensiblement identiques. Les branches 7 peuvent être angulairement équidistantes les unes des autres. Il peut en résulter une qualité perçue élevée pour un utilisateur d'un véhicule équipé d'une roue 50 assemblée avec un tel accessoire 1.

Selon une variante de l'accessoire 1, les branches 7 peuvent ne pas être similaires ou identiques entre elles. Les différentes branches 7 d'un même accessoire 1 peuvent présenter des formes et/ou des dimensions différentes. Les branches 7 peuvent ne pas être toutes angulairement équidistantes les unes des autres.

En variante, l'accessoire 1 pourrait être plus plat que dans le mode de réalisation représenté sur les différentes figures. L'accessoire 1 pourrait comprendre une portion plus importante de sa surface au même niveau ou sensiblement au même niveau selon la direction Y que la partie centrale 3. L'au moins une branche 7 peut présenter une surface plus ou moins concave vue de la face avant de l'accessoire 1. L'au moins une branche 7 peut présenter une forme plus ou moins évasée du contour externe 10 vers le contour externe 15.

En variante, les branches 7 de l'accessoire 1 pourraient être moins ajourées que dans le mode de réalisation représenté sur les différentes figures. Les dimensions des ouvertures 9 peuvent être plus ou moins élevées. Au moins une des branches 7 peut ne pas comprendre d'ouverture 9. La forme et/ou les dimensions de l'ouverture 9 peut varier pour les différentes branches 7 d'un même accessoire 1. Les ouvertures 9 peuvent être de toute forme, notamment choisie dans le groupe comprenant les ouvertures triangulaires, circulaires, oblongues, rectangulaires, carrées. La forme et/ou les dimensions des ouvertures ou ajours 9 de l'accessoire 1 pourront être choisies notamment en fonction des performances aérodynamiques souhaitées pour un véhicule destiné à être équipé d'une roue associée à l'accessoire 1 et/ou en fonction de la qualité perçue souhaitée pour un ensemble comprenant un accessoire 1 et une roue.

La forme et/ou les dimensions de l'accessoire 1 seront choisies en fonction notamment des caractéristiques de la roue avec laquelle l'accessoire 1 est destiné à être associé, et pour optimiser notamment le compromis entre d'une part la qualité perçue de l'ensemble roue et accessoire et d'autre part les performances aérodynamiques d'un véhicule destiné à être équipé d'une telle roue ou d'un tel ensemble.

Avantageusement, au moins une branche 7 de l'accessoire 1 peut comprendre un ou des motifs 2 ou une texturation, notamment de surface, par exemple de type « peau de requin » ou en forme d'écailles, par exemple du type illustré en figures 2, 3, 8 et 10. De tels motifs, optionnels, sont notamment destinés à modifier l'aspect esthétique de l'accessoire 1 par rapport à un accessoire 1 de surface lisse ou sensiblement lisse. Il en résulte une personnalisation possible de l'accessoire 1 par son état de surface. Les motifs peuvent être apparents en face avant et/ou en face arrière de l'accessoire 1.

De préférence, l'accessoire 1 peut être en au moins un matériau plastique.

L'accessoire 1 comprend par exemple au moins un matériau plastique, par exemple à base d'au moins un matériau polymère thermodurcissable, notamment choisi dans le groupe comprenant le polypropylène expansé et les polyamides.

A titre d'exemple de matériau, l'accessoire 1 est par exemple en une résine composite comprenant du polypropylène expansé et un polyamide, par exemple en NORYL GTX902^{™}.

L'accessoire 1 peut comprendre en outre au moins un moyen de fixation. L'au moins un moyen de fixation peut comprendre un moyen de fixation central 20 et/ou un moyen de fixation périphérique 30.

Le moyen de fixation central 20 peut comprendre au moins un dispositif de fixation 21, notamment un clip ou clip de retenue ou de maintien ou d'attache. Avantageusement, le moyen de fixation central 20 est situé en face arrière de l'accessoire 1.

Le moyen de fixation périphérique 30 peut comprendre au moins un dispositif de fixation 31, notamment un clip ou clip de retenue ou de maintien ou d'attache. Avantageusement, le moyen de fixation périphérique 30 est situé en face arrière de l'accessoire 1.

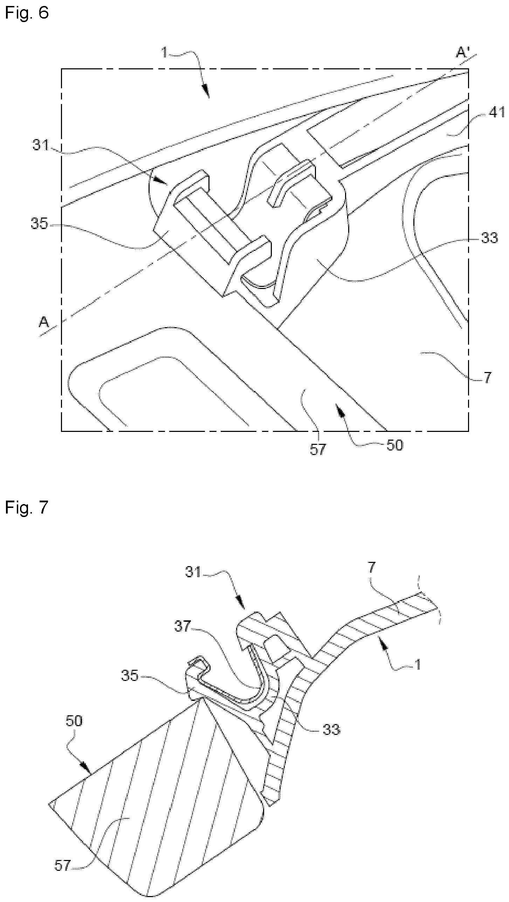

De préférence, le dispositif de fixation 31, notamment de type clip, est destiné, une fois fixé de façon amovible sur une roue 50, à être au moins en partie situé derrière un bras 57 d'une roue. Cela est particulièrement bien visible sur la figure 6.

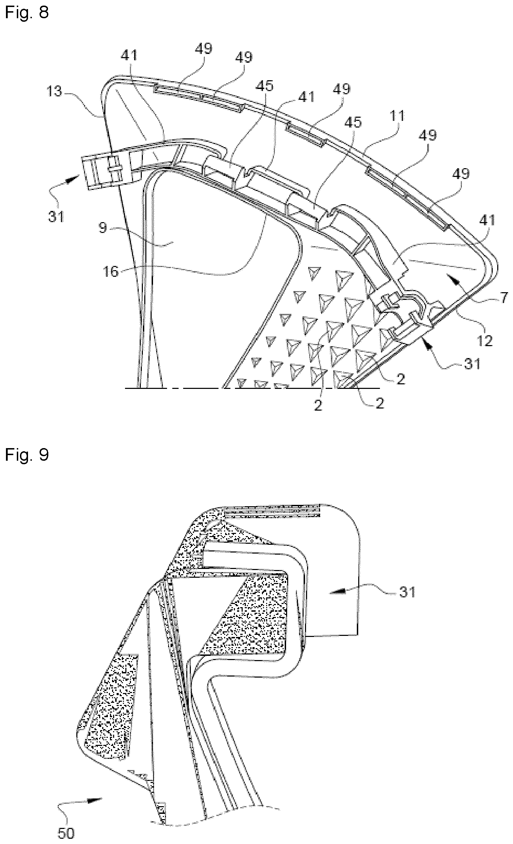

La Demanderesse a réalisé des études et/ou des développements et/ou des simulations et/ou des essais, notamment en termes de plan d'encombrement et concernant des considérations thermiques, notamment pour positionner au moins en partie, en position assemblée de l'accessoire 1 avec une roue 50, le dispositif de fixation 31 derrière un bras 57 de la roue. Un exemple de résultat de telles simulations est illustré en figure 9.

L'accessoire 1 peut comprendre, pour au moins une branche 7, un premier dispositif de fixation 31, notamment un clip, par exemple bi-matière, situé sur le bord radial 12 de la branche 7 ou proche du bord radial 12, et un deuxième dispositif de fixation 31, notamment un clip, par exemple bi-matière, situé sur le bord radial 13 de la branche 7 ou proche du bord radial 13. Avantageusement, le premier dispositif de fixation 31 et le deuxième dispositif de fixation 31 de l'au moins une branche 7 peuvent être situés sur le bord radial 12, 13 respectif à un emplacement proche de l'extrémité distale de la branche 7 par rapport à la partie centrale 3, autrement dit à en emplacement proche du bord périphérique 11. Le premier dispositif de fixation 31 et le deuxième dispositif de fixation 31 sont par exemple disposés de façon symétrique par rapport à un plan médian de la branche 7 passant par le centre de l'accessoire 1.

Le moyen de fixation central 20 et le moyen de fixation périphérique 30 sont destinés à permettre de fixer, de façon amovible ou temporaire, l'accessoire 1 sur une roue 50, tout en assurant un bon maintien de l'accessoire 1 sur une roue 50, en particulier lorsqu'un véhicule équipé d'une telle roue est en mouvement ou en roulage. Le moyen de fixation central 20 et le moyen de fixation périphérique 30 sont en outre destinés à permettre d'extraire l'accessoire 1 par rapport à l'ensemble comprenant une roue et l'accessoire 1, ou à détacher l'accessoire 1 par rapport à une roue 50, par exemple pour pouvoir dévisser une roue 50 pour l'extraire d'un véhicule, en particulier dans le cas où l'accessoire 1 recouvre la ou les vis de fixation de la roue sur un véhicule.

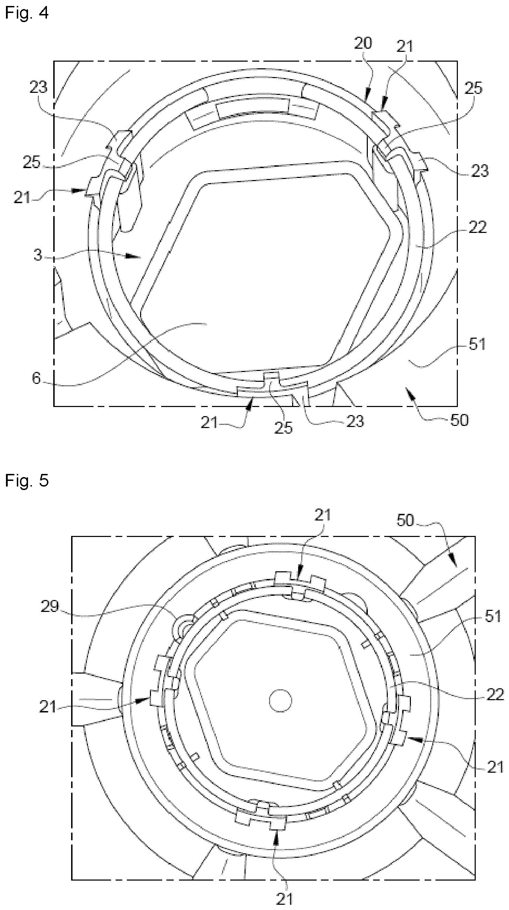

Le moyen de fixation central 20 et le moyen de fixation périphérique 30 seront décrits plus en détails ci-après en référence aux figures 4 à 8.

Un ensemble 70 comprenant une roue 50, notamment en aluminium, pour un véhicule, et un accessoire 1 du type de celui décrit ci-dessus, est décrit ci-après en référence à la figure 3.

La roue 50 peut comprendre un moyeu 51 et une jante 53.

La roue 50 peut comprendre en outre une structure 55 s'étendant entre le moyeu 51 et la jante 53.

La structure 55 comprend par exemple au moins un bras 57, par exemple plusieurs bras 57. L'au moins un bras 57 peut présenter une forme sensiblement allongée.

L'au moins un bras 57 de la roue 50 peut s'étendre à partir du moyeu 51 et rayonner radialement jusqu'à la jante 53.

Dans le mode de réalisation représenté sur les différentes figures, les bras 57 ne sont pas tous angulairement équidistants les uns des autres. Chaque bras 57 peut comprendre un premier bras 57 voisin et un deuxième bras 57 voisin. Chaque bras 57 peut être séparé du premier bras 57 voisin et du deuxième bras 57 voisin par deux distances angulaires différentes. Une alternance d'une première distance angulaire et d'une deuxième distance angulaire peut être présente entre les bras 57 successifs de la roue 50.

Les bras 57 délimitent des premières ouvertures ou ajours 59 et des deuxièmes ouvertures ou ajours 60. Les premières ouvertures 59 correspondant par exemple à la première distance angulaire et les deuxièmes ouvertures 60 correspondant par exemple à la deuxième distance angulaire. La première distance angulaire est par exemple supérieure à la deuxième distance angulaire.

Les premières ouvertures 59 sont par exemple de forme sensiblement triangulaire, le sommet correspondant à une portion du moyeu 51 de la roue 50 et la base correspondant à une portion de la jante 53 de la roue 50.

L'accessoire 1 peut être configuré de sorte qu'au moins une branche 7 de l'accessoire 1, notamment la deuxième portion 8b, soit apte à s'engager au moins partiellement dans une ouverture 59 d'une roue 50.

Les deuxièmes ouvertures 60 sont par exemple de forme sensiblement rectangulaire. Les deuxièmes ouvertures 60 sont par exemple chacune délimitées par deux bras 57 sensiblement parallèles entre eux et par une portion du moyeu 51 et de la jante 53 de la roue 50.

La roue 50 peut comprendre en outre au moins un orifice 61. Les orifices 61 entourent au moins partiellement le moyeu 51. Les orifices 61 sont par exemple angulairement équidistants les uns des autres. Chaque orifice 61 est par exemple destiné à recevoir une vis pour la fixation de la roue 50 sur un véhicule.

L'au moins une branche 7 ou pale de l'accessoire 1 est par exemple destinée à s'insérer, ou configurée pour s'insérer, au moins partiellement, dans une ouverture 59 de la roue 50. Lorsque l'accessoire 1 est assemblé de façon amovible avec une roue 50, l'au moins une branche 7 peut s'étendre dans l'ouverture 59 en profondeur ou de façon plongeante de la surface avant vers la surface arrière d'une roue 50. Chaque branche 7 de l'accessoire 1 peut être configurée pour s'insérer, au moins partiellement, dans une ouverture 59 de la roue 50. Les ouvertures 60 de la roue 50 sont par exemple maintenues ajourées lorsque l'accessoire 1 est assemblé de façon amovible avec la roue 50. Il en résulte notamment une qualité perçue élevée d'un ensemble roue et accessoire.

La roue 50 peut être en un matériau métallique ou en un alliage métallique. La roue 50 est par exemple en aluminium.

La roue 50 comprend par exemple dix bras 57, séparés entre eux par cinq ouvertures 59 et cinq ouvertures 60, les ouvertures 59 et les ouvertures 60 étant disposées de façon alternée les unes à la suite des autres de façon rayonnante entre le moyeu 51 et la jante 53. Une telle roue 50 est par exemple destinée à être assemblée avec un accessoire 1 comprenant cinq branches 7.

L'accessoire 1 est par exemple configuré de sorte que l'au moins une branche 7 s'insère, au moins partiellement, dans une ouverture ou ajour 59 de la roue 50. L'accessoire 1 est par exemple configuré de sorte à laisser visible ou apparente au moins une partie d'une roue 50 sur laquelle l'accessoire 1 est destiné à être monté de façon amovible, notamment de sorte à laisser visible ou apparente une partie dite diamantée d'une roue 50, notamment en aluminium. Il en résulte une qualité perçue accrue d'un ensemble comprenant un accessoire 1 et une roue 50, par rapport notamment à un ensemble dont l'accessoire 1 en plastique recouvrirait entièrement la face avant métallique d'une roue.

Le nombre de bras 57 d'une roue 50 peut varier. La forme et/ou les dimensions des ouvertures 59 et/ou des ouvertures 60 entre deux bras 57 d'une roue 50 peut varier. Le nombre de branches 7 de l'accessoire 1 pourra notamment être choisie et/ou la forme de l'accessoire 1 pourra notamment être adaptée, en particulier la forme de la partie périphérique 5 de l'accessoire 1, en fonction de la roue 50 sur laquelle l'accessoire 1 est destiné à être agencé.

Avantageusement, l'accessoire 1 est destiné à être fixé de façon amovible sur une roue 50 au moyen d'au moins un clip 21, 31. Avantageusement, l'accessoire 1 est destiné à être clipsé ou clippé ou encliquetté sur une roue 50. Il en résulte que l'accessoire 1 peut être extrait de l'ensemble 70 comprenant une roue 50 et l'accessoire 1, ou peut être détaché de la roue 50, avantageusement sans endommager la roue 50 et sans détacher la roue 50 du véhicule.

Avantageusement, l'au moins un clip 21, 31 comprend au moins une patte ou patte de clippage 25, 35. L'au moins une patte de clippage 25, 35 est notamment destinée à gérer ou à supprimer des jeux d'une roue 50 ou des jeux entre une roue 50 et un accessoire 1 du type de celui décrit ci-dessus.

De façon optionnelle, au moins une nervure 49 peut être prévue en face arrière d'au moins une branche 7 de l'accessoire 1. Un exemple d'une telle nervure 49 est illustré en figure 8. L'au moins une nervure 49 peut avoir une fonction de moyen d'espacement ou de dispositif d'espacement ou d'espaceur, de sorte maintenir une distance entre l'accessoire 1 et une roue 50. La nervure 49 est destinée à être en contact avec une roue 50.

L'invention concerne également un procédé de fabrication d'un accessoire 1 du type de celui décrit ci-dessus, et un procédé de fabrication d'un ensemble comprenant une roue et un accessoire du type de celui décrit ci-dessus.

L'accessoire 1 peut être formé par moulage par injection, notamment d'au moins un matériau plastique, avantageusement sous la forme d'une seule pièce.

L'au moins un matériau plastique est par exemple choisi dans le groupe comprenant le polypropylène expansé et les polyamides.

De préférence, l'accessoire 1 est configuré de sorte que l'accessoire 1 soit au moins partiellement distant par rapport à la forme ou aux contours d'une roue 50. Il peut exister un jeu entre une roue 50, notamment en aluminium et un accessoire 1, notamment en plastique. Un tel jeu (ou de la marge) est avantageusement prévu lors de la fabrication d'un accessoire 1 et/ou lors de la fabrication d'une roue 50 pour des raisons de montage d'un tel accessoire 1 sur une roue 50. En effet, dans le cas notamment d'une roue 50 en aluminium fabriquée par moulage, les tolérances du procédé de fabrication peuvent être supérieures à celles de l'accessoire 1 formé par moulage par injection, notamment d'au moins un matériau plastique.

Un mode de réalisation d'un moyen de fixation central 20 et un mode de réalisation d'un moyen de fixation périphérique 30 d'un accessoire 1 sont décrits plus en détails ci-après en référence aux figures 4 à 8.

L'au moins un moyen de fixation de l'accessoire 1, comprenant un moyen de fixation central 20 et/ou un moyen de fixation périphérique 30, est destiné à fixer de façon amovible ou détachable l'accessoire 1 sur une roue 50.

Le moyen de fixation central 20, comprenant au moins un dispositif de fixation 21, et/ou le moyen de fixation périphérique 30, comprenant au moins un dispositif de fixation 31, peut comprendre au moins une partie formant, avec la partie centrale 3 et la partie périphérique 5 de l'accessoire 1, une seule pièce, notamment en au moins un matériau plastique.

L'accessoire 1 comprenant une partie centrale 3, une partie périphérique 5 et au moins une partie d'au moins un dispositif de fixation 21 et/ou au moins une partie d'au moins un dispositif de fixation 31, peut former une seule pièce, notamment en au moins un matériau plastique.

Le moyen de fixation central 20 et/ou le moyen de fixation périphérique 30 peut être co-intégrés partiellement avec l'accessoire 1 sous la forme d'une seule pièce, notamment en au moins un matériau plastique.

L'accessoire 1, comprenant un moyen de fixation central 20 et/ou un moyen de fixation périphérique 30, peut être formé par moulage par injection d'au moins un matériau plastique, notamment en utilisant un seul moule.

Le moyen de fixation central 20 et/ou le moyen de fixation périphérique 30 comprennent par exemple au moins un clip de type rectangulaire et/ou de type bi-matière.

Le moyen de fixation central 20 et/ou le moyen de fixation périphérique 30 sont destinés à fixer de façon amovible l'accessoire 1 à une roue 50, notamment par clippage ou clipsage ou cliquetage ou encliquetage.

Un mode de réalisation d'un moyen de fixation central 20 d'un accessoire 1 sur une roue 50 est décrit plus en détails ci-après en référence aux figures 4 et 5.

Le moyen de fixation central 20 comprend au moins un dispositif de fixation 21, ou d'attache, central. L'au moins un dispositif de fixation 21 est destiné à maintenir, de façon détachable ou amovible, la partie centrale 3 de l'accessoire 1 sur une roue 50, notamment sur un moyeu 51. Le moyen de fixation central 20 est destiné à assurer un maintien robuste et/ou fiable de l'accessoire 1 sur une roue 50.

Le moyen de fixation central 20 peut comprendre au moins un clip ou un clip d'anneau 21, comprenant au moins une patte de clippage 25, et un anneau 22. Le moyen de fixation central 20 peut comprendre un anneau 22 et plusieurs clips ou clips d'anneau 21, par exemple trois clips 21, comprenant chacun une patte de clippage 25. La patte de clippage 25 de l'au moins un clip 21 peut être destinée à être clippée ou clipsée ou encliquetée sur un anneau 22, de sorte à fixer de façon amovible l'accessoire 1 sur une roue 50. L'anneau 22 est destiné à maintenir la patte de clippage 25 de l'au moins un clip 21, notamment sur le moyeu 51 d'une roue 50.

Le dispositif de fixation ou clip 21 peut comprendre un corps, ou support, 23 et une patte de clippage, ou ergot 25, notamment élastique. Le corps 23 est destiné à servir de support pour l'ergot 25. L'ergot 25, notamment élastique, est destiné à servir de patte de clippage.

L'au moins un dispositif de fixation central 21 peut être un clip. L'au moins un dispositif de fixation 21 peut être un clip bi-matière. L'au moins un dispositif de fixation 21 peut comprendre une première partie, obtenue notamment par moulage d'au moins un matériau plastique, formant une seule pièce avec les parties centrale 3 et périphérique 5 de l'accessoire 1, et une deuxième partie en au moins un matériau différent de celui de la première partie. La deuxième partie de l'au moins un dispositif de fixation 21 est par exemple en au moins un matériau métallique.

La première partie du dispositif de fixation 21 correspond par exemple au corps, ou support, 23 et à la patte de clippage, ou ergot, 25, notamment élastique, du dispositif de fixation 21.

En variante, l'au moins un dispositif de fixation 21 peut comprendre une première partie et une deuxième partie de nature identique ou sensiblement identique, notamment en au moins un matériau plastique.

L'accessoire 1 peut comprendre un ou plusieurs dispositifs de fixation 21.

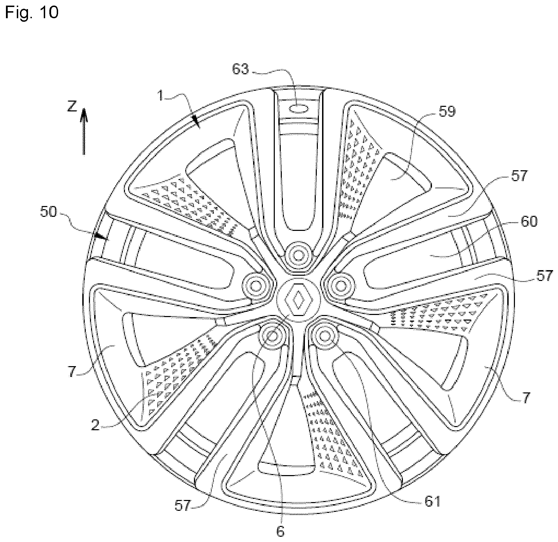

De façon optionnelle, l'accessoire 1 peut comprendre un élément anti-rotation 29. Un exemple d'un tel élément anti-rotation 29 est illustré en figure 5. L'élément anti-rotation 29 peut être co-intégré ou non sous la forme d'une seule pièce avec les autres éléments de l'accessoire 1. L'élément anti-rotation 29 peut être destiné à s'engager avec un élément correspondant, par exemple de forme circulaire, pouvant être prévu sur une roue 50. L'élément anti-rotation 29 ou détrompeur ou dispositif d'indexation angulaire est par exemple situé en partie centrale 3 de l'accessoire 1, de préférence du côté de la face arrière. Le positionnement de l'élément anti-rotation 29 en partie centrale 3 est par exemple choisi en fonction du positionnement de l'au moins un clip 21 en partie centrale 3 de l'accessoire 1. Une fonction d'un tel élément anti-rotation 29 sera décrite plus en détails ci-après en référence à la figure 10.

Un mode de réalisation d'un moyen de fixation périphérique 30 d'un accessoire 1 est décrit plus en détails ci-après en référence aux figures 6 à 9.

Le moyen de fixation périphérique 30 comprend au moins un dispositif de fixation 31, ou d'attache, périphérique. L'au moins un dispositif de fixation 31 est destiné à maintenir la partie périphérique 5 de l'accessoire 1 sur une roue 50, notamment sur au moins un bras 57.

L'au moins un dispositif de fixation 31 périphérique peut être un clip. L'au moins un dispositif de fixation 31 peut être un clip bi-matière. L'au moins un dispositif de fixation 31 peut comprendre une première partie, obtenue notamment par moulage d'au moins un matériau plastique, formant une seule pièce avec les parties centrale 3 et périphérique 5 de l'accessoire 1, et une deuxième partie en au moins un matériau différent de celui de la première partie. La deuxième partie de l'au moins un dispositif de fixation 31 est par exemple en au moins un matériau métallique.

L'au moins un dispositif de fixation 31 peut comprendre une deuxième partie formant une lame élastique ou un ressort 37. Un matériau adapté pour le ressort ou la lame élastique pourra être choisi en fonction des propriétés élastiques souhaitées.

La lame ressort 37 de l'au moins un dispositif de fixation 31 est par exemple en acier.

En variante, l'au moins un dispositif de fixation 31 peut comprendre une première partie et une deuxième partie de nature identique ou sensiblement identique, notamment en au moins un matériau plastique.

La lame ressort 37, formant par exemple la deuxième partie du dispositif de fixation 31, peut être associée ultérieurement à la première partie du dispositif de fixation 31, après la formation de la première partie par moulage par injection en même temps que les autres éléments de l'accessoire 1. En variante, la lame ressort 37 peut être formée en même temps que la première partie du dispositif de fixation 31, notamment par moulage par injection d'un ou plusieurs matériaux.

Le dispositif de fixation 31 peut comprendre une première partie 33, 35, notamment en plastique, obtenue par moulage par injection en même temps que le reste de l'accessoire 1, et une deuxième partie correspondant à un moyen de rappel élastique 37, notamment un ressort.

Le dispositif de fixation ou clip 31 peut comprendre un corps, ou support, 33 et une patte de clippage, ou ergot, 35. Le corps 33 est destiné à servir de support pour l'ergot 35. L'ergot 35, notamment élastique, est destiné à servir de patte de clippage.

Le dispositif de fixation 31 peut comprendre en outre un moyen de rappel élastique 37, notamment une lamelle ou lame élastique ou un ressort.

Avantageusement, le support 33 de l'au moins un clip 31 comprend au moins une portion en forme de creux ou évasée. Le moyen de rappel élastique 37 est destiné à être inséré dans la partie en creux du support 33 du clip 31. En position verrouillée du clip 31 sur une roue 50, notamment sur un bras 57, le moyen de rappel élastique 37 est comprimé. Le moyen de rappel élastique 37 présente une courbure ou une inflexion dans la partie en creux du support 33 du clip 31, épousant par exemple sensiblement la forme de la partie en creux du support 33 du clip 31. Une traction sur l'accessoire 1 permet de déverrouiller l'au moins un dispositif de fixation 31, en utilisant la force de rappel élastique de la patte de clippage 35 et éventuellement du moyen de rappel élastique 37. Ceci permet notamment d'extraire l'accessoire 1 ou de détacher l'accessoire 1 par rapport à une roue 50. Le détachement de l'accessoire 1 peut être notamment facilité dans le cas de l'utilisation d'un clip 31 bi-matière comprenant une lame ressort 37.

L'accessoire 1 peut comprendre plusieurs dispositifs de fixation 31, par exemple deux dispositifs de fixation 31 sur chaque branche 7, notamment un premier dispositif de fixation 31 à un emplacement proche de l'extrémité distale, par rapport à la partie centrale 3, du bord radial 12 de la branche 7, et un deuxième dispositif de fixation 31 à un emplacement proche de l'extrémité distale, par rapport à la partie centrale 3, du bord radial 13 de la branche 7. Il en résulte un maintien robuste et fiable d'un accessoire 1 tel que celui décrit ci-dessus sur une roue 50, empêchant notamment tout détachement non contrôlé par un utilisateur de l'accessoire 1, par exemple lorsqu'un véhicule équipé d'une roue 50 est en mouvement.

Une ou des rainures 39 peuvent être prévues entre deux clips 31 d'une même branche 7, en face arrière de l'accessoire 1.

De façon optionnelle, l'accessoire 1 peut comprendre au moins un élément de renforcement ou de consolidation 41. De préférence, l'au moins un élément de renforcement 41 est situé en face arrière de l'accessoire 1, par exemple à un emplacement proche du bord périphérique 11 de l'au moins une branche 7, et notamment proche d'une ouverture 9 ménagée dans la branche 7. L'au moins un élément de renforcement 41 peut présenter une forme allongée, et peut présenter une direction principale d'élongation sensiblement parallèle au bord périphérique 11 d'une branche 7. L'au moins un élément de renforcement 41 peut présenter une forme allongée courbe ou non rectiligne.

Avantageusement, l'au moins un élément de renforcement 41 peut être formé par moulage par injection d'au moins un matériau plastique en même temps que les autres éléments de l'accessoire 1.

Avantageusement, l'au moins un élément de renforcement 41 est flexible ou souple. L'au moins un élément de renforcement 41 est notamment destiné à augmenter la raideur ou rigidité de la portion correspondante de la branche 7.

De façon optionnelle, l'accessoire 1 peut comprendre au moins un moyen de maintien 45 additionnel. Avantageusement, l'au moins un moyen de maintien 45 est situé en face arrière de l'accessoire 1, par exemple à un emplacement proche du bord périphérique 11 d'une branche 7, et notamment proche d'une ouverture 9 ménagée dans la branche 7. L'au moins un moyen de maintien 45 peut présenter une forme allongée, et peut présenter une direction principale d'élongation sensiblement parallèle au bord périphérique 11 d'une branche 7 et/ou sensiblement parallèle à un bord 16 d'une branche 7 délimitant une ouverture 9. L'au moins un moyen de maintien 45 est notamment destiné à s'engager avec un élément correspondant situé sur une roue 50. Il peut en résulter une fixation améliorée d'un accessoire 1 sur une roue 50.

Une fonction d'un élément anti-rotation 29 du type de celui décrit ci-dessus en relation avec la figure 5 est décrit ci-après en référence à la figure 10. Une roue 50 comprend par exemple un trou de valve 63, destiné au gonflage d'un pneumatique destiné à être disposé autour de la jante 53.

Avantageusement, l'élément anti-rotation 29 permet d'obtenir un positionnement et/ou un alignement souhaité entre des bras 57 d'une roue 50 et/ou un trou de valve 63 et/ou une valve de gonflage d'une roue 50 et/ou un support 6 pour un logo d'une marque automobile. Un tel élément anti-rotation 29 est notamment destiné à positionner un support 6 pour un logo d'une marque automobile de la façon souhaitée, notamment alignée, par rapport à une valve de gonflage 63 d'un pneumatique disposé sur une roue 50. Lors de présentations dans des salons ou expositions dans le domaine de l'automobile, une roue 50 d'un véhicule automobile est habituellement positionnée de sorte que la valve de gonflage 63 soit située à la position la plus élevée possible selon une direction Z perpendiculaire au sol, selon un plan vertical passant par le centre de la roue. Il en résulte une qualité perçue élevée d'un véhicule équipé d'une telle roue, notamment lors de la présentation d'un tel véhicule dans des salons ou expositions.

Avantageusement, l'accessoire 1 peut être configuré pour ne pas recouvrir des orifices 61 destinés au passage de vis, notamment pour la fixation de la roue 50 sur un véhicule, lorsque l'accessoire 1 est en place sur une roue 50. Il en résulte un démontage possible de la roue 50 par rapport à un véhicule 100, même lorsque l'accessoire 1 est présent, assemblé avec la roue 50 de façon amovible.

En variante, l'accessoire 1 peut être configuré pour recouvrir au moins partiellement au moins un orifice 61 destiné au passage d'une vis de fixation d'une roue, lorsque l'accessoire 1 est en place sur une roue 50. Il en résulte une qualité perçue élevée d'un ensemble comprenant une roue 50 et un accessoire 1. L'au moins un moyen de fixation 20, 30 de l'accessoire 1 permet dans ce cas, avantageusement, de détacher l'accessoire 1 facilement par rapport à la roue 50, notamment pour accéder aux vis de fixation de la roue, afin de détacher la roue 50 par rapport au véhicule 100. Il en résulte un démontage facile de la roue 50 par rapport à un véhicule 100 en cas de besoin, sans qu'il soit requis d'accéder à la face arrière de la roue 50, ce qui s'avère habituellement complexe et long.

Un mode d'exécution d'un procédé de montage d'un accessoire 1 sur une roue 50 est décrit ci-après.

Dans une première étape, on fixe, de façon amovible, la partie périphérique 5 de l'accessoire 1 sur une roue 50, notamment sur au moins un bras 57, notamment au moyen du moyen de fixation périphérique 30. Pour cela, on réalise notamment le clippage ou clipsage ou encliquettage de l'au moins un dispositif de fixation 31 sur une roue 50, notamment sur un bras 57.

Dans une deuxième étape, on fixe, de façon amovible, la partie centrale 3 de l'accessoire 1, notamment sur un moyeu 51 d'une roue 50, notamment au moyen du moyen de fixation central 20. Pour cela, on réalise notamment le clippage ou clipsage ou encliquettage de l'au moins un dispositif de fixation 21 sur une roue 50, notamment sur un moyeu 51, de préférence en utilisant un anneau 22.

De préférence, la deuxième étape de montage est réalisée après la première étape. On positionne l'accessoire 1 sur une roue 50 de préférence d'abord par les branches 7 de la partie périphérique 5, puis par la partie centrale 3.

L'assemblage amovible de l'accessoire 1 par rapport à une roue 50 peut être réalisé par simple pression d'un utilisateur sur l'accessoire 1, sans utiliser d'outil.

Avantageusement, aucune rotation de la partie centrale 3 de l'accessoire 1 n'est requise lors du montage.

Un mode d'exécution d'un procédé de démontage d'un accessoire 1 par rapport à une roue 50 est décrit ci-après.

Dans une première étape, on détache la partie périphérique 5 de l'accessoire 1 par rapport à une roue 50, notamment par rapport à un ou des bras 57. Pour cela, on utilise notamment la force de rappel élastique de la patte de clippage 35 et éventuellement du moyen de rappel élastique 37 de l'au moins un dispositif de fixation 31 du moyen de fixation périphérique 30.

Dans une deuxième étape, on détache la partie centrale 3 de l'accessoire 1 par rapport à la roue 50, notamment par rapport à un moyeu 51. Pour cela, on utilise notamment la force de rappel élastique de la patte de clippage 25.

De préférence, la deuxième étape de démontage est réalisée après la première étape. On retire l'accessoire 1 de préférence d'abord par les branches 7 de la partie périphérique 5, puis par la partie centrale 3.

Le retrait de l'accessoire 1 par rapport à l'ensemble 70 accessoire/roue peut être réalisé de façon aisée par un utilisateur, sans utiliser d'outil, notamment par simple traction sur l'accessoire 1. De façon optionnelle, un outil, par exemple un crochet, pourrait être utilisé par faciliter le retrait de l'accessoire 1, notamment le déverrouillage des dispositifs de fixation 31 et 21.

Avantageusement, aucune rotation de l'accessoire 1, notamment de la partie centrale 3, n'est requise lors du montage ni lors du démontage, pour la mise en place ou le retrait de l'accessoire 1 sur une roue 50.

Un avantage d'un accessoire pour une roue du type de celui décrit ci-dessus est lié au fait qu'il permet de minimiser la masse d'un ensemble comprenant un accessoire 1 et une roue 50.

Un avantage d'un accessoire pour une roue du type de celui décrit ci-dessus est lié au fait que l'accessoire 1 permet de conserver des parties d'une roue 50 visibles. Il en résulte une qualité perçue élevée d'un ensemble comprenant un accessoire 1 et une roue 50.

Un avantage d'un accessoire pour une roue du type de celui décrit ci-dessus est lié au fait que l'accessoire peut être configuré de sorte à recouvrir des orifices 61 destinés au passage des vis de fixation d'une roue et/ou de sorte à recouvrir des vis de fixation d'une roue. Il en résulte une qualité perçue élevée d'un ensemble 70 comprenant un accessoire 1 et une roue 50. Ceci est particulièrement avantageux par exemple lors d'animations design ou de salons de l'automobile.

Un avantage d'un accessoire pour une roue du type de celui décrit ci-dessus est lié au fait qu'une roue peut être démontée facilement par rapport à un véhicule, en présence ou non d'un accessoire du type de celui décrit ci-dessus. Il en résulte qu'un utilisateur d'un véhicule équipé d'une telle roue peut procéder facilement au remplacement d'une roue par une autre roue.

Un avantage d'un accessoire pour une roue du type de celui décrit ci-dessus est lié au fait qu'il peut présenter une grande variété de formes possibles, par exemple une forme complexe, notamment en raison du fait qu'un tel accessoire peut être formé par moulage par injection d'au moins un matériau plastique.

Un avantage d'un accessoire pour une roue du type de celui décrit ci-dessus réside dans le fait qu'il est personnalisable et/ou interchangeable.

Un avantage d'un accessoire pour une roue du type de celui décrit ci-dessus réside dans le fait qu'il comprend au moins un moyen de fixation assurant une fixation robuste et/ou fiable et amovible de l'accessoire sur une roue. L'au moins un moyen de fixation d'un tel accessoire permet de résister à des contraintes thermiques élevées, par exemple liées à des phénomènes de convection et/ou de rayonnement dus aux freins positionnés derrière la roue d'un véhicule automobile qui peuvent entraîner dans des cas extrêmes d'essais des valeurs de température supérieures à 700°C.

Un avantage d'un accessoire pour une roue du type de celui décrit ci-dessus réside dans le fait qu'il permet, notamment grâce à l'au moins un moyen de fixation, un montage et un démontage d'un tel accessoire par rapport à une roue de façon rapide, avec une durée des étapes de montage et/ou de démontage raisonnable.

Un avantage d'un accessoire pour une roue du type de celui décrit ci-dessus est lié au fait que le montage et/ou le démontage d'un tel accessoire par rapport à une roue ne requiert l'utilisation d'aucun outil. Le montage et le démontage d'un tel accessoire par rapport à une roue est simple.

Un avantage d'un accessoire pour une roue du type de celui décrit ci-dessus est lié au fait que le montage et/ou le démontage d'un tel accessoire par rapport à une roue peut être réalisé par la face avant de la roue. Il en résulte qu'il n'est pas nécessaire de démonter la roue par rapport à un véhicule pour détacher l'accessoire par rapport à la roue.

Un avantage d'un ensemble comprenant une roue et accessoire pour une roue du type de celui décrit ci-dessus est lié au fait que la roue peut être utilisée avec ou sans l'accessoire. En outre, un tel accessoire est interchangeable. Un tel accessoire peut ainsi être remplacé par un autre accessoire sans qu'il soit nécessaire de changer de roue. Il en résulte un coût réduit de maintenance ou d'entretien et/ou une personnalisation accrue d'un véhicule équipé d'un tel ensemble ou d'une telle roue.

Bien que l'invention ait été décrite dans le cas d'une roue en aluminium, ce qui permet notamment d'obtenir une roue légère et d'optimiser le compromis qualité perçue et coût, l'invention s'applique à tout type de roue, notamment métallique. L'invention s'applique de façon particulièrement avantageuse aux roues formées par moulage d'au moins un matériau, par exemple métallique et/ou à base de carbone et/ou composite. Toutefois, l'invention peut également s'appliquer aux roues formées par emboutissage, par exemple aux roues en acier embouties.

Bien que l'invention ait été décrite ci-dessus dans le cas d'un véhicule automobile, l'invention s'applique à tout type de véhicules comprenant au moins une roue, par exemple à des camions, bus, trottinettes, véhicules destinés à une utilisation dans le domaine de l'aérospatiale.

## Revendications

1. Accessoire (1) pour une roue d'un véhicule, notamment destiné à être fixé de façon amovible à une roue, par exemple par clippage, l'accessoire (1) comprenant, sous la forme d'une seule pièce, une partie centrale (3) destinée à recouvrir au moins partiellement un moyeu (51) d'une roue (50), et une partie périphérique (5) comprenant au moins une branche (7), l'au moins une branche (7) étant destinée à s'insérer au moins partiellement dans une ouverture (59) délimitée par deux bras (57) reliant un moyeu (51) à une jante (53) d'une roue (50).

2. Accessoire selon la revendication 1, **caractérisé en ce que** :
- la partie centrale (3) a la forme d'un disque ; et/ou
- l'accessoire (1) est configuré pour laisser apparentes au moins certaines portions d'une roue (50) ; et/ou
- l'accessoire (1) est de forme non plane, l'au moins une branche (7) de la partie périphérique (5) étant notamment apte à s'étendre dans une ouverture (59) d'une roue (50), d'une surface avant d'une roue (50) vers une surface arrière d'une roue (50).

3. Accessoire (1) selon la revendication 1 ou 2, **caractérisé en ce qu'**il est en au moins un matériau plastique, notamment choisi dans le groupe comprenant le polypropylène expansé et les polyamides, et/ou **en ce qu'**il est formé par moulage par injection, notamment d'au moins un matériau plastique, sous la forme d'une seule pièce.

4. Accessoire selon l'une quelconque des revendications précédentes, comprenant au moins un moyen de fixation (20, 30) destiné à fixer de façon amovible l'accessoire (1) à une roue (50), l'au moins un moyen de fixation comprenant au moins un clip (21, 31), notamment bi-matière, par exemple au moins en partie formé par moulage par injection en même temps que la partie centrale (3) et la partie périphérique (5) de l'accessoire (1) sous la forme d'une seule pièce.

5. Accessoire selon la revendication précédente, comprenant :
- un moyen de fixation central (20), comprenant au moins un clip (21) et éventuellement un anneau (22), l'au moins un clip (21) comprenant notamment une patte de clippage (25), destiné à la fixation amovible de l'accessoire (1), notamment de sa partie centrale (3), sur une roue (50), notamment sur un moyeu (51) ; et/ou
- un moyen de fixation périphérique (30), comprenant au moins un clip (31), comprenant notamment une patte de clippage (35) et éventuellement un moyen de rappel élastique (37), destiné à la fixation amovible de l'accessoire (1), notamment de sa partie périphérique (5), sur une roue (50), notamment sur un bras (57).

6. Accessoire selon la revendication précédente, dans lequel l'au moins une patte de clippage (35) du moyen de fixation périphérique (30) est destinée à être positionnée derrière un bras (57) d'une roue (50).

7. Ensemble (70) comprenant une roue (50) pour un véhicule, notamment en aluminium, et un accessoire (1) selon l'une quelconque des revendications précédentes, configuré pour être fixé de façon amovible à la roue (50), la roue (50) comprenant au moins deux bras (57) reliant un moyeu (51) à une jante (53), la partie périphérique (5) de l'accessoire (1) comprenant par exemple cinq branches (7), chaque branche (7) étant destinée à s'insérer au moins partiellement dans une ouverture (59) de la roue (50) délimitée par deux bras (57).

8. Véhicule (100), notamment véhicule automobile, comprenant un accessoire (1) selon l'une quelconque des revendications 1 à 6 ou un ensemble (70) selon la revendication précédente.

9. Procédé de montage d'un accessoire (1) selon l'une quelconque des revendications 1 à 6 sur une roue (50), comprenant les étapes suivantes :
- fixation amovible de la partie périphérique (5) sur une roue (50), notamment sur au moins un bras (57) ;
- fixation amovible de la partie centrale (3) sur le moyeu (51) de la roue (50).

10. Procédé de fabrication d'un accessoire (1) selon l'une quelconque des revendications 1 à 6, comprenant une étape de moulage par injection, notamment d'au moins un matériau plastique, par exemple choisi dans le groupe comprenant le polypropylène expansé et les polyamides, en utilisant un seul moule, notamment pour former une partie centrale (3), une partie périphérique (5) et au moins une partie d'un moyen de fixation central (20) et/ou d'un moyen de fixation périphérique (30) de l'accessoire.
